# EUROPEAN PATENT SPECIFICATION

(11) **EP 2 702 010 B1**
(45) Date of publication and mention of the grant of the patent: **03.06.2020**
(21) Application number: 12716037.2
(22) Date of filing: 24.04.2012
(51) Int. Cl.: C02F 1/42, B01J 39/04, B01J 47/02, C02F 1/00

(54) **SYSTEM FOR CONDITIONING A LIQUID SUCH AS WATER**
SYSTEM ZUR KONDITIONIERUNG EINER FLÜSSIGKEIT WIE WASSER
SYSTÈME DE CONDITIONNEMENT D'UN LIQUIDE TEL QUE L'EAU

(30) Priority: 26.04.2011 EP 11163692
(43) Date of publication of application: 05.03.2014
(73) Proprietor: Brita GmbH, 65232 Taunusstein (DE)
(72) Inventor: CONRADT, Berthold, 65205 Wiesbaden (DE)
(86) International application number: PCT/EP2012/057422
(87) International publication number: WO 2012/146567

(56) References cited:
- DE-A1-102004 049 876
- GB-A- 698 190
- US-A- 2 226 743
- US-A- 2 287 284
- US-A- 2 807 582
- US-A1- 2010 288 700

## Description

The invention relates to a system for conditioning a liquid such as water according to the preamble of claim 1.

The invention also relates to a cartridge for a liquid treatment device.

EP 2 263 503 A2 discloses a device for preparing tea, having a water tank and a water filter positioned therein for preparing drinking water, the water filter having a housing and a filter material arranged therein. The filter material comprises a first weakly acidic cation exchange material in the hydrogen form, which takes up 30-70 % of the volume of ion exchange material, and further comprises at least a second cation exchange material in the sodium or potassium form. The housing comprises a beaker-shaped lower part, an upper part arranged thereon and an inner chamber arranged in its interior. The inner chamber forms a downward flow chamber through which water flows downwards in use, in which filter material is arranged. This can be a first, weakly acidic cation exchanger in the hydrogen form. A second cation exchanger, for example in the sodium or potassium form, is shown arranged in an upward flow chamber surrounding the downward flow chamber.

A problem of the known system and method is that they allow only limited control over the composition of the treated water. For example, calcium and magnesium are removed almost completely, and elevated amounts of sodium or potassium are present in the treated water.

US 2003/0168395 A1 refers to Japanese Patent No. 2,989,150, which is stated to disclose a cartridge container which contains a cation exchange resin; and a sprayer which is attached to an upper mouth of the cartridge container, and which has a suction pipe connected to an upper portion of the cartridge container, and is configured so that the raw water in a main container passes through the cartridge container from its lower portion and is then sprayed from the sprayer. The interior of the cartridge container is partitioned by a partition plate in parallel of the flow direction of the raw water to form a first tubular container portion and a second tubular container portion. An Na type of K type cation exchange resin is packed into the first tubular container portion fo form an Na type or K type cation exchange resin layer, and an H type cation exchange resin is packed into the second tubular container portion form an H type cation exchange resin layer. When the sprayer is depressed, the raw water in the main container passes through the cartridge container with being branched into the Na type or K type cation exchange resin layer and the H type cation exchange resin layer, so that hard ions such as calcium ions and magnesium ions are exchanged with soft ions such as Na ions or K ions in the Na type or K type cation exchange resin layer, and exchanged with H ions in the H type cation exchange resin layer. Thereafter, the two kinds of ion-exchanged soft water are mixed with each other.

It is an object of the invention to provide a system and cartridge for a liquid treatment device that allow for relatively good control over the composition of the treated liquid in terms of at least the relative amounts of different ion species present.

This object is achieved by the system according to claim 1.

The media in the first and second holder can be configured to exchange at least one of the first and second counter ion species for ions in the liquid to be treated to a different extent for the reason that one of the counter ion species is not present in one of the media. The different extent may refer to the extent to which the counter ion species is exchanged for ions in the liquid in general or for a specific ion species in the liquid. One or both of the ion exchange materials in the first and second holders may be amphoteric.

By providing an ion exchange material loaded with at least a first counter ion species and an ion exchange material loaded with at least a second counter ion species of the same polarity as the first, wherein the media in the first and second holders are configured to exchange at least one of the first and second counter ion species for ions in the liquid to a different extent, it is possible to influence the levels of the first and second counter ion species in the treated liquid, i.e. the composition of the treated liquid. Because the system is arranged to lead a first fraction of the liquid to be treated through only the first of the first and second holders, it is possible to influence at least the relative amounts of the first and second counter ion species present in the liquid, and to do so independently. The term ion exchange materials as used herein includes in particular ion exchange resins, chelating resins and inorganic ion exchange materials such as zeolites. Using the example of a weakly acid cation exchange polymer, a typical example of such a material will under most conditions have the following selectivity series:
H⁺ > Cu²⁺ > Pb²⁺ > Fe²⁺ > Zn²⁺ > Ni²⁺ > Cd²⁺ > Ca²⁺ > Mg²⁺ > Sr²⁺ > Ba²⁺ > Ag⁺ > K⁺ > NH₄⁺ > Na⁺ > Li⁺. It has been found that it is not possible to achieve a satisfactory mix of minerals in the treated water by mixing ion exchange materials loaded with different cation species or by passing the liquid to be treated through differently loaded ion exchange materials in succession. If, for example, one of the ion exchange materials is loaded with sodium and the other with potassium, then the treated liquid will have a raised sodium content until the ion exchange material is substantially depleted of sodium, and only then will the potassium be released. Thus, the composition of the treated liquid will vary, and it is not possible to achieve anything approaching a desired ratio of sodium to potassium, for instance. By leading a first fraction of the liquid to be treated through only the first of the first and second holders, it is possible to ensure that a counter ion species for which the ion exchange material has a relatively strong affinity is nevertheless released in the water to be treated, even at the beginning of the useful lifetime of the system. Unlike in a system with an ion exchanger and a bypass, a second fraction of the liquid to be treated passes through at least the second of the first and second holders. This enables the water composition to be determined in a way that is less dependent on the composition of the water to be treated. Moreover, it is possible to ensure the presence of at least two different counter ion species in the liquid to be treated.

It is observed that EP 2 022 760 A2 discloses a filter cartridge for a water filter apparatus that has at least two chambers which are separated at least sectionwise. Preferably, the chambers are arranged in parallel in the flow-sense. The two chambers separated from each other can be filled with different filter media. There is no disclosure of the nature of the different filter media. It is further disclosed that a chamber with a medium for the release of ions, flavouring and/or trace elements can be arranged above the inlet of the cartridge, after its outlet or between the inlet and the outlet. In a preferred embodiment, the addition of food supplements occurs in a region arranged after the filter stage, in particular in a further chamber. There is no disclosure of the nature of the material arranged in the further chamber. It is noted that a mixture of differently loaded ion exchange materials would not function well for the reasons given above. Even an ion exchange material loaded with a single counter ion species, e.g. magnesium would not function well, because the magnesium would only be exchanged for any calcium and heavy metals left in the water after the filter stage.

In an embodiment of the system according to the invention, the first and second counter ion species are cation species, in particular cation species other than hydrogen, more particularly cation species from a group comprising sodium, potassium and magnesium.

Cations have a particular influence on the taste of potable liquids such as water and beverages that are infusions or decoctions made with water. Cations other than hydrogen have physiological effects as well. Treating water by passing it through a weakly acidic cation exchanger partially loaded with a monovalent or divalent cation species other than hydrogen, for example, one of the cation species named above, and partially in the hydrogen form is used to achieve an acidity suitable for preparing beverages such as tea (i.e. approximately neutral). The use of ion exchange material partially loaded with one cation species other than hydrogen in one holder and ion exchange material partially loaded with another cation species other than hydrogen in another holder, where at least a fraction of the liquid to be treated is led through only one of the holders, allows one to achieve the same effect of establishing an appropriate acidity level, and in addition to achieve a desired mix of minerals.

Because at least one of the medium in the first holder and the medium in the second holder includes an amount of cation exchange material in the hydrogen form, at least calcium is removed from the liquid to be treated, so that the water is softened. If at least one of the medium in the first holder and the medium in the second holder includes both an amount of cation exchange material in the hydrogen form and an amount of cation exchange material loaded with a cation species other than hydrogen, the acidity of the treated water is set and a particular cation species is released into the liquid to be treated. A further cation species may be released by the medium in the other of the first and second holders. If the medium in the other of the first and second holders also includes both an amount of cation exchange material in the hydrogen form and an amount of cation exchange material loaded with a cation species other than hydrogen, the overall acidity of the treated water can be set by varying the ratio's of the differently loaded ion exchange materials included in the first and second media, assuming that the relative rates of flow through the first and second holder and/or the sizes of the first and second fractions are used to set a certain ratio of first and second counter ion species.

In a variant, both the medium in the first holder and the medium in the second holder include an amount of cation exchange material in the hydrogen form.

Thus, the cation exchange material in at least one of the first and second holders is partially loaded with hydrogen and partially loaded with another cation species. The cation exchange material in the other of the first and second holders is either fully in the hydrogen form or partially in the hydrogen form and partially loaded with a cation species other than hydrogen. The preparation of the media is made easier and cheaper in this manner, because it is not necessary to provide cation exchange material that is fully loaded with a cation species other than hydrogen. The latter alternative would require the use of an excess solution of the cation species other than hydrogen and subsequent rinsing. By contrast, the rinsing step can be omitted in this variant.

In another variant, the cation exchange material in the first holder is partially loaded with one cation species other than hydrogen and the cation exchange material in the second holder is partially loaded with another cation species other than hydrogen.

This embodiment is easy to prepare and can be used to provide liquid with a particular mix of different minerals. In a particular example, the first cation species may be monovalent and the second cation species may be divalent.

In an embodiment, the first and second media include only ion exchange materials of the same type.

That is to say that the counter ion species is different, but the material providing the functional sites is the same. An effect is to simplify production of the system. This variant is also suitable for embodiment in a single device, e.g. a replaceable cartridge with a single housing containing both the first and the second holders. Such a device is relatively easy to recycle, because there is no need to separate two types of ion exchange material.

A similar effect can be achieved if the first and second media include only ion exchange materials, in particular resins, having at least one of the same selectivity series and the same functional groups.

Such materials can be readily mixed, since they may differ at most in terms of the kinetics of the ion exchange process, which for many applications is not of importance. Thus, the contents of the first and second holders may be mixed in the recycling process. In the selectivity series of the ion exchange materials comprised in the media in the first and second holders, the order of ion species could be the same but the exchange constants different for the materials in the respective holders.

The system is arranged to lead at least a third fraction of the liquid to be treated through neither of the first and second holders.

An effect is to provide more control over the composition of the treated liquid. One can choose to retain a certain counter ion species (calcium for instance) that would otherwise always be removed using a bypass conduit containing no ion exchange material (or an ion exchange material for ion species of opposite polarity). The third fraction can still be subjected to other types of treatment such as mechanical filtering, adsorption (e.g. by means of an activated carbon filter), etc.

An embodiment of the system comprises a replaceable cartridge having a housing, wherein the first and second holders are arranged within the housing.

An effect is to provide a relatively simple way of implementing the system. In particular, this embodiment can be implemented by modifying an existing filter' cartridge design, to retain backwards compatibility to filter systems already in use.

An alternative embodiment comprises at least two replaceable cartridges, each including a respective housing, wherein the first and second holders are arranged within respective ones of the housings.

An effect is that one can use separate filter cartridges, each separately recyclable. In an embodiment, the housings are substantially the same in design, but the composition of the treated liquid is variable by varying the flow rates of liquid fractions led through the respective housings.

According to another aspect of the invention, there is provided a cartridge for a liquid treatment device including a system according to the invention.

The cartridge can in particular be used to adapt existing liquid treatment devices to provide for more control of the treated liquid.

The invention will be explained in further detail with reference to the accompanying drawings, in which:
Fig. 1 is a perspective view of a first type of filter cartridge for implementing a system for conditioning a liquid such as water;
Fig. 2 is a cross-sectional view of the filter cartridge of Fig. 1;
Fig. 3 is a side view of a liquid treatment device in the form of a jug arranged to receive a second type of filter cartridge for implementing a system for conditioning a liquid such as water;
Fig. 4 is a cross-sectional view of a filter cartridge of the second type in a cartridge seat;
Fig. 5 is a very schematic view of an embodiment of a system for conditioning a liquid using two filter cartridges of a similar type to the one illustrated in Figs. 1 and 2; and
Fig. 6 is a very schematic view of an embodiment of a system for conditioning liquid using two filter cartridges of a similar type to the one illustrated in Fig. 4.

A suction filter cartridge 1 is of the type generally described in WO 2006/040121 A1, but adapted to implement a system for conditioning water so as to provide more control over at least the mineral composition of the water, but generally also the acidity. The present description will focus on the features providing this adaptation. Other details can be found in the aforementioned publication.

The suction filter cartridge 1 is replaceably mounted on the base 2 of a tank (not shown in detail) provided with a suitable mechanical interface. The tank can be part of an appliance for making beverages such as tea or coffee. It can also be part of an appliance for providing water for other purposes, e.g. water for an aquarium, water for plants or flowers, etc.

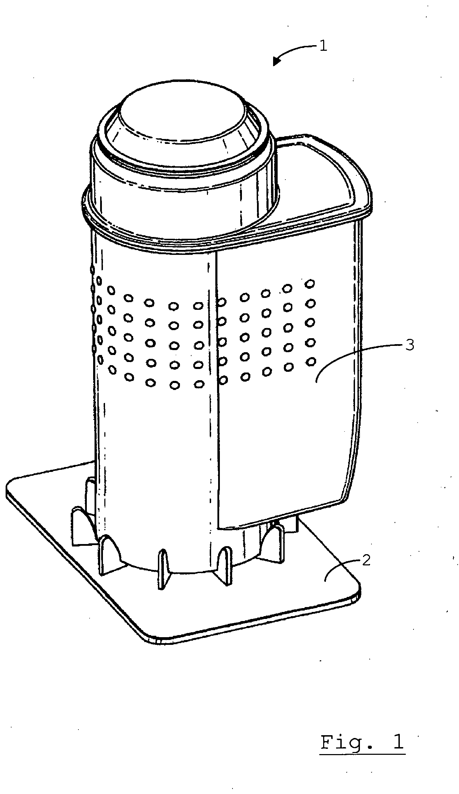

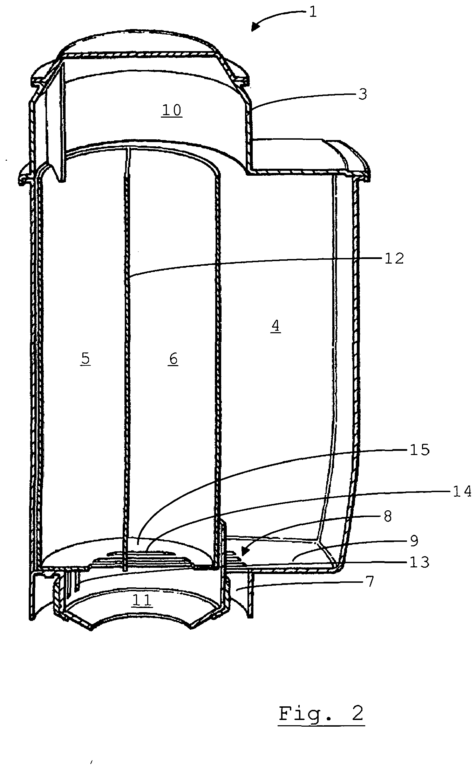

The suction filter cartridge 1 shown in Figs. 1 and 2 includes an outer housing 3, within which are arranged a first chamber 4, second chamber 5 and third chamber 6 (Fig. 2). In use, water enters the suction filter cartridge 1 through an annular inlet channel 7. From there, it passes into the first chamber 4 through inlet apertures 8 provided in a bottom wall 9 of the first chamber 4.

The first chamber 4 can house any one or more of a number of media for treating water including mechanical filter material, such as pleated membranes (not shown), ion exchange material, antimicrobial filter material and the like.

From the first chamber 4, the water passes into a connecting chamber 10, where it is separated into two streams. A first fraction of the water to be treated proceeds into the second chamber 5, whereas a second fraction of the water to be treated proceeds into the third chamber 6. The streams are reunited upon treatment when they reach an outlet 11 of the suction filter cartridge 1.

The second and third chambers 5,6 are separated by a partition wall 12. Strict separation such as could be achieved by providing means for preventing backflow from the second and third chambers 5,6 is not required. The illustrated arrangement is sufficient to ensure that a first fraction of the water to be treated is led through only the second chamber 5 and a second fraction of the water to be treated is led through only the third chamber 6.

It is noted that the illustrated suction filter cartridge 1 is provided with bypass conduits 13, so that a third fraction of the water to be treated is not led through either of the second and third chambers 5, 6.

In use, the second chamber 5 is filled with a medium (not shown for reasons of clarity) for treating water, which medium includes a mixture of an amount of cation exchange material in the hydrogen form and an amount of (the same) cation exchange material loaded with a first counter ion species. The cation exchange material can be organic or inorganic, but will generally be a weakly acidic cation exchange resin. The first counter ion species can be potassium, sodium or magnesium, for example.

It is noted that the medium in the second chamber 5 can include further materials, e.g. activated carbon or granular material coated and/or impregnated with silver. The media will generally be present in granular form, with the granules being large enough to preclude them from passing through outlet apertures 14 provided in a bottom wall 15 of the second and third chambers 5,6 or apertures in a mesh (not shown) overlying the outlet apertures 14.

Similarly, the third chamber 6 is filled with a medium (also not shown for reasons of clarity) for treating water, which medium includes a mixture of an amount of cation exchange material in the hydrogen form and an amount of (the same) cation exchange material loaded with a second counter ion species (i.e. different from the first counter ion species). Again, the cation exchange material can be organic or inorganic, but will generally be a weakly acidic cation exchange resin. The second counter ion species can be a different one of the three counter ion species mentioned above as examples.

By choosing an appropriate ratio of hydrogen to counter ion species (i.e. the ratio of the number of functional sites occupied by hydrogen to the number of functional sites occupied by the counter ion species on first use of the suction filter cartridge 1), the pH of the water leaving the second and third chambers 5,6 can be set to a value in the region of 7.0 or another desired value. The exact ratio that is required depends on the counter ion species and is easily determined through routine experimentation.

To simplify production of the suction filter cartridge 1, the ion exchange material in the second chamber 5 and in the third chamber 6 can be the same (i.e. the same polymer in the case of an ion exchange resin). This makes it easy to recycle the suction filter cartridge 1, e.g. by cutting it in two or shredding it and separating the plastic housing 3 from the media inside it.

Under typical conditions (room temperature, mains drinking water), a typical weakly acidic cation exchange polymer will have the following selectivity series: H⁺ > Cu²⁺ > Pb²⁺ > Fe²⁺ > Zn²⁺ > Ni²⁺ > Cd²⁺ > Ca²⁺ > Mg²⁺ > Sr²⁺ > Ba²⁺ > Ag⁺ > K⁺ > NH₄⁺ > Na⁺ > Li⁺. Assuming that the counter ion species in the second chamber 5 is magnesium and the counter ion species in the third chamber 6 is potassium, one can see that calcium and heavy metals in the water will be exchanged for magnesium in the second chamber 5 and for potassium in the third chamber 6. If there were no partition wall 12, then there wouldn't be much or any magnesium in the treated water provided by the suction filter cartridge 1 to start with, because the ion exchange material preferentially exchanges potassium for the magnesium in the water to be treated. The same would be the case if the second and third chambers 5,6 were to be arranged in series, rather than in parallel.

Calcium is preferentially removed in both the second and the third chamber 5,6. However, the bypass conduits 13 allow a third fraction of the water to be treated to bypass the second and third chambers 5,6. It is therefore possible to provide treated water including calcium, magnesium and potassium. By varying the size of the bypass conduits 13 and the flow resistance of the second and third chambers 5,6 the relative amounts of the three species of cation in the treated water can be set.

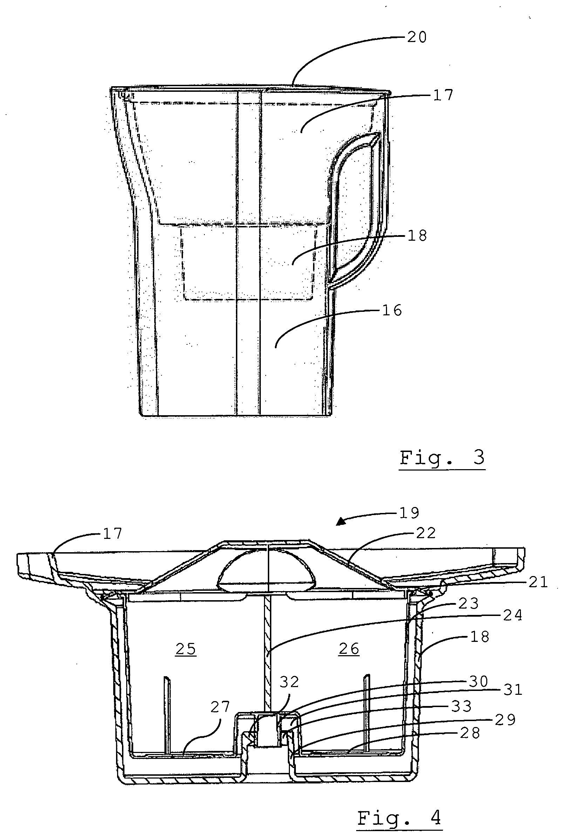

A different type of liquid treatment device (Figs. 3 and 4) comprises a jug 16 including a funnel 17 with a generally cup-shaped filter cartridge seat 18 for accommodating a replaceable filter cartridge 19. The illustrated liquid treatment device is therefore of the pour-through or gravitational type. The filter cartridge seat 18 is integral with the funnel 17 and situated at the bottom of the latter, where water poured into the funnel 17 through an opening in a lid 20 of the jug 16 collects.

As best seen in Fig. 4, the filter cartridge 19, which is essentially of the type described in WO 2005/118104 A1, is provided with a sealing rim 21 corresponding in shape to an upper opening of the filter cartridge seat 18, such that, when the filter cartridge 19 is properly inserted, the sealing rim 21 sealingly contacts the entire perimeter of the opening.

The filter cartridge 19 includes an outer housing comprising an upper part 22 and a cup-shaped lower housing part 23. Because the sealing rim 21 essentially prevents any bypass of water, water poured into the funnel 17 is forced to flow through openings (not shown in detail) in the upper housing part 22.

A partition wall 24 divides an interior space further delimited by the lower housing part 23 into a first and second chamber 25,26, respectively. In the illustrated embodiment, the first and second chambers 25,26 are of essentially equal size, but this need not be the case.

Each of the first and second chambers 25,26 is provided with a respective outlet 27,28 in the form of an array of small apertures (not shown in detail) in a bottom wall of the filter cartridge 19, through which water leaves the filter cartridge 19. The water collects in the bottom of the filter cartridge seat 18. The filter cartridge seat 18 includes a raised part 29 having an opening arranged to receive a projection 30 provided in a recess 31 in the bottom of the filter cartridge 19. The purpose of this construction is described in detail in WO 2005/118104 A1. In brief, the projection 30 interacts with a latching element 32 having the shape of a segment of an annulus and provided on the inside of an aperture at a top end of the raised part 29. The interaction is such as to lock the filter cartridge in place at a well-defined vertical position that ensures that the sealing rim 21 actually seals off the top opening of the filter cartridge seat 18. The projection 30 also forms a flow constriction together with the remainder of the aperture at the top end of the raised part 29. The size of a resulting opening 33 is determined by the extent of the latching element 32 along the circumference of the aperture at the top end of the raised part 29.

The illustrated filter cartridge 19 differs from the filter cartridge described in WO 2005/118104 A1, in that the latter has no partition wall 24 at least partially dividing its interior into first and second chambers 25,26. In use, the first chamber 25 is filled with a medium (not shown) for treating water including an ion exchange material loaded with at least a first counter ion species. The second chamber 26 is filled with a medium (not shown) for treating water including an ion exchange material loaded with at least a second (i.e. different from the first) counter ion species, of the same polarity as the first counter ion species. The media in the first and second chambers 25,26 are configured to exchange at least one of the first and second counter ion species for ions in the water passing through them to a different extent. In one example, this difference is accounted for by the fact that the first and second counter ion species are (at least on first use) exclusively present in the first and second chambers 25,26 respectively.

In one implementation, the medium in the first chamber 25 comprises a mixture of weakly acidic ion exchange material in the hydrogen form and weakly acidic ion exchange material loaded with cations of the first counter ion species. The ratio is selected to achieve a certain pH of the treated water leaving the first outlet 27. The medium optionally comprises activated carbon granules and/or granules impregnated and/or coated with silver. Similarly, the medium in the second chamber 26 comprises a mixture of weakly acidic ion exchange material in the hydrogen form and weakly acidic ion exchange material loaded with cations of the second counter ion species, with the ratio between the two selected to achieve a certain pH of the treated water leaving the second outlet 28, which need not be the same as that of the treated water leaving the first outlet 27.

To simplify production of the filter cartridge 19, the ion exchange material in the first chamber 25 and that in the second chamber 26 can be the same (i.e. the material providing the functional sites is the same). This makes it easy to recycle the filter cartridge 19, e.g. by cutting it open or shredding it and separating the plastic housing 22,23 from the media inside it.

In the filter systems described above, the media for treating liquid are held in holders that are contained within a single housing, the housing being that of a replaceable filter cartridge of the filter system. This makes it possible to adapt existing filter systems to provide water with a desired ratio of ions of different species. Moreover, there need be only one mechanical interface for the suction filter cartridge 1 and only one cartridge filter seat 19 for the filter cartridge 19, respectively.

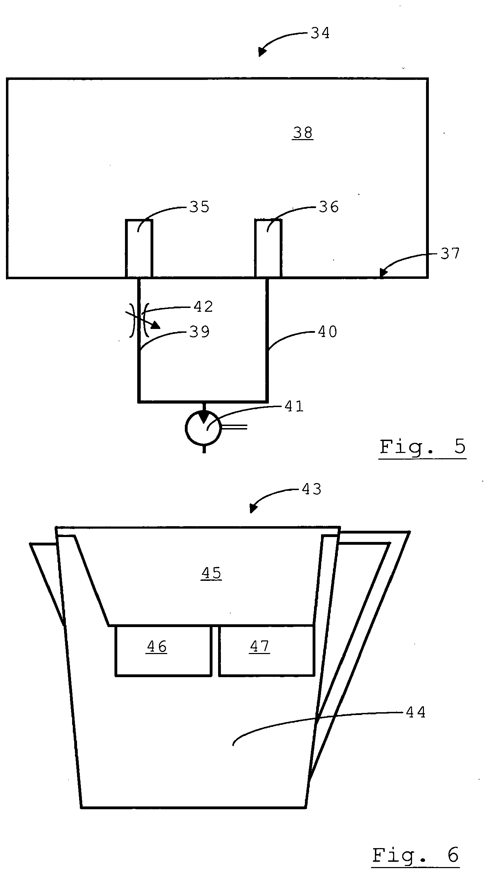

In an alternative to the filter system described above with reference to Figs. 1 and 2, a filter system 34 as illustrated schematically in Fig. 5 includes two suction filter cartridges 35,36. The suction filter cartridges 35,36 are essentially of the type described in WO 2006/040121 A1, that is to say without the partition wall 12. The suction filter cartridges 35,36 are of the replaceable type, connected to a bottom wall 37 of a tank 38 for storing water to be treated. Mechanical interfaces (not shown) provide the means of attachment, as well as a fluid connection to first and second conduit sections 39,40, respectively. The first and second conduit sections 39,40 combine upstream of a pump 41 for pumping water treated by the suction filter cartridges 35,36 to a point of use.

The first suction filter cartridge 35 includes a chamber for holding a medium for treating water, which medium includes an ion exchange material loaded with at least a first counter ion species. The second suction filter cartridge 36 includes a chamber for holding a medium for treating water, which medium includes an ion exchange material loaded with at least a second counter ion species, of the same polarity as the first. The media in the first and second suction filter cartridges 35,36 are configured to exchange at least one of the first and second counter ion species for ions in the water to be treated to a different extent. Because a first fraction of the water to be treated is led through only the first suction filter cartridge 35 and a second fraction of the water to be treated is led through only the second suction filter cartridge 36 but the flows of treated water from the suction filter cartridges 35,36 are combined before the point of use, it is possible to provide treated water with a certain mix of ions, at least as far as their respective proportions of the total are concerned.

As in the other examples, the medium in the first suction filter cartridge 35 can include a mixture of weakly acidic ion exchange material in the hydrogen form and weakly acidic ion exchange material loaded with a first cation species. The medium in the second suction filter cartridge 35,36 can include a mixture of weakly acidic ion exchange material in the hydrogen form and weakly acidic ion exchange material loaded with a second cation species. At least initially, there is no ion exchange material loaded with the first cation species in the second suction filter cartridge 36. Because the suction filter cartridges 35,36 are separate, in the sense that they comprise separate respective housings, the ion exchange material in the respective cartridges need not be the same. Also, the first and second suction filter cartridge 35,36 need not contain the same quantity of medium for treating water.

To allow the proportions of the different ion species to be varied during use of the filter system 34, a variable flow resistance 42 is provided in the first conduit section 39. Thus, the amount of treated water that has passed through only the first suction filter cartridge 35 relative to the amount of treated water that has passed through only the second suction filter cartridge 36 can be varied. In an alternative embodiment, there are separate pumps in each of the first and second conduit sections 39,40, but the illustrated embodiment with the variable flow resistance 42 will generally be cheaper to manufacture.

Similar principles are applied in a gravity-driven filter system 43 as shown schematically in Fig. 6. This system is generally of the type illustrated in WO 2005/118104 A1, making use of the same filter cartridges, i.e. those illustrated in Fig. 4 but without the partition wall 24. Thus, the filter system 43 comprises a jug 44 with an insertable funnel 45 for receiving water to be treated. This funnel 45 comprises first and second filter cartridge seats 46,47, each for housing a filter cartridge of the type illustrated in Fig. 4 but without the partition wall 24.

A fraction of the water to be treated passes through only the filter cartridge in the first filter cartridge seat 46, and a second fraction of the water to be treated passes through only the filter cartridge in the second filter cartridge seat 47.

In use, the first filter cartridge seat 46 accommodates a filter cartridge containing a medium for treating liquid that includes an ion exchange material loaded with at least a first counter ion species. The second filter cartridge seat 47 accommodates a filter cartridge containing a medium for treating liquid that includes an ion exchange material loaded with at least a second counter ion species, of the same polarity as the first counter ion species. The media in the first and second filter cartridges are configured to exchange at least one of the first and second counter ion species for ions in water to be treated to a different extent. In particular, the medium in the first filter cartridge can be a mixture of weakly acidic ion exchange material in the hydrogen form and weakly acidic ion exchange material loaded with ions of the first counter ion species. The medium in the second filter cartridge can be a mixture of weakly acidic ion exchange material in the hydrogen form and weakly acidic ion exchange material loaded with ions of the second counter ion species, but, at least initially, without ion exchange material loaded with ions of the first counter ion species. It is possible to use different ion exchange materials (i.e. the materials providing the functional sites) in the first and second filter cartridges.

For maximum versatility, the filter cartridges to be inserted in the first and second filter cartridge seats 46,47 can have identically shaped housings. The mix of ions present in the treated water can be set exclusively by means of an appropriate configuration of the media in the cartridges. Alternatively, the flow resistance provided by the interaction between the filter cartridge seats 46,47 and the respective cartridges inserted therein can differ between the two filter cartridge seats 46,47. More particularly, the size of the opening 33 can be different due to a different extent of the latching element 32 that extends partly around the inner circumference of the raised part 29 of the filter cartridge seat. Thus, the user can even influence the mineral composition by choosing which filter cartridge to insert in which filter cartridge seat 46,47.

The invention is not limited to the embodiment described above but can be varied within the scope of the accompanying claims. For example, the system for conditioning a liquid can also be comprised in a filter cartridge for an in-line system (i.e. a system in which the filter cartridge is connected to a filter head provided in a conduit for water under pressure.

Although the systems disclosed herein have been described using water as the liquid to be treated, they are equally suitable for conditioning other liquids, in particular beverages.

**LIST OF REFERENCE NUMERALS**

| | | |
|---|---|---|
| 1 | - | Suction filter cartridge |
| 2 | - | Base |
| 3 | - | Housing |
| 4 | - | First chamber |
| 5 | - | Second chamber |
| 6 | - | Third chamber |
| 7 | - | Annular inlet channel |
| 8 | - | Inlet apertures |
| 9 | - | Bottom wall of first chamber |
| 10 | - | Connecting chamber |
| 11 | - | Outlet |
| 12 | - | Partition wall |
| 13 | - | Bypass conduit |
| 14 | - | Outlet aperture |
| 15 | - | Bottom wall of second and third chambers |
| 16 | - | Jug |
| 17 | - | Funnel |
| 18 | - | Filter cartridge seat |
| 19 | - | Filter cartridge |
| 20 | - | Lid |
| 21 | - | Sealing rim |
| 22 | - | Upper housing part |
| 23 | - | Lower housing part |
| 24 | - | Partition wall |
| 25 | - | First chamber |
| 26 | - | Second chamber |
| 27 | - | First outlet |
| 28 | - | Second outlet |
| 29 | - | Raised part |
| 30 | - | Projection |
| 31 | - | Recess |
| 32 | - | Latching element |
| 33 | - | Opening |
| 34 | - | Filter system |
| 35 | - | Suction filter cartridge |
| 36 | - | Suction filter cartridge |
| 37 | - | Bottom wall |
| 38 | - | Tank |
| 39 | - | 1^{st} Conduit section |
| 40 | - | 2^{nd} Conduit section |
| 41 | - | Pump |
| 42 | - | Flow resistance |
| 43 | - | Filter system |
| 44 | - | Jug |
| 45 | - | Funnel |
| 46 | - | Filter cartridge seat |
| 47 | - | Filter cartridge seat |

## Claims

1. System for conditioning a liquid such as water, including:
a first holder (5;25;35) of a medium for treating liquid, the medium in the first holder (5;25;35) including an ion exchange material loaded with at least a first counter ion species; and
a second holder (6;26;36) of a medium for treating liquid, the medium in the second holder including an ion exchange material loaded with at least a second counter ion species of the same polarity as the first, wherein the media in the first and second
holders (5,6;25,26;35,36) are configured to exchange at least one of the first and second counter ion species for ions in the liquid to a different extent,
wherein at least one of the medium in the first holder (5;25;35) and the medium in the second holder (6;26;36) includes an amount of cation exchange material in the hydrogen form,
wherein the system is arranged to lead a first fraction of the liquid to be treated through only the first of the first and second holders (5,6;25,26;35,36) and a second fraction of the liquid to be treated through at least the second of the first and second
holders (5,6;25,26;35,36), and
wherein the system comprises a replaceable cartridge having a housing in which the first and second holders (5,6;25,26) are arranged or comprises at least two replaceable cartridges (35,36), each including a respective housing, in which the first and second holders are respectively arranged, **characterised in that**
the ion exchange material included in the media in the first and second holders (5,6;25,26;35,36) is a weakly acidic cation exchange polymer, and
**in that** the system is arranged to lead at least a third fraction of the liquid to be treated through neither of the first and second holders (5,6), but through a bypass conduit containing no ion exchange material or an ion exchange material for ion species of opposite polarity to the first and second counter ion species.

2. System according to claim 1, wherein
the first and second counter ion species are cation species, in particular cation species other than hydrogen, more particularly cation species from a group comprising sodium, potassium and magnesium.

3. System according to claim 1 or 2, wherein the medium in the first holder (5;25;35) and the medium in the second holder (6;26;36) includes an amount of cation exchange material in the hydrogen form.

4. System according to any one of the preceding claims, wherein
the cation exchange material in the first holder (5;25;35) is partially loaded with one cation species other than hydrogen and the cation exchange material in the second holder (6;26;36) is partially loaded with another cation species other than hydrogen.

5. System according to claim 4,
wherein the first cation species is monovalent and the second cation species is divalent.

6. System according to any one of the preceding claims, wherein
the first and second media include only ion exchange materials of the same type.

7. System according to any one of the preceding claims,
wherein the first and second media include only ion exchange materials having the same functional groups.

8. Cartridge for a liquid treatment device (16,17), including a system according to any one of claims 1-7.

## Patentansprüche

1. System zum Aufbereiten einer Flüssigkeit, wie z. B. Wasser, beinhaltend:
einen ersten Halter (5; 25; 35) eines Mediums zum Behandeln einer Flüssigkeit, wobei das Medium in dem ersten Halter (5; 25; 35) ein lonenaustauschmaterial beinhaltet, das mit wenigstens einer ersten Gegenion-Spezies beladen ist; und
einen zweiten Halter (6; 26; 36) eines Mediums zum Behandeln der Flüssigkeit, wobei das Medium in dem zweiten Halter ein lonenaustauschmaterial beinhaltet, das mit wenigstens einer zweiten Gegenion-Spezies derselben Polarität wie die erste beladen ist,
wobei die Medien in dem ersten und dem zweiten Halter (5, 6; 25, 26; 35, 36) konfiguriert sind, wenigstens eine von der ersten und der zweiten Gegenion-Spezies für lone in der Flüssigkeit in einem unterschiedlichen Ausmaß auszutauschen,
wobei wenigstens eines von dem Medium in dem ersten Halter (5; 25; 35) und dem Medium in dem zweiten Halter (6; 26; 36) eine Menge von Kationenaustauschmaterial in der Wasserstoffform beinhaltet,
wobei das System angeordnet ist, um einen ersten Anteil der zu behandelnden Flüssigkeit nur durch den ersten von dem ersten und dem zweiten Halter (5, 6; 25, 26; 35, 36) und einen zweiten Anteil der zu behandelnden Flüssigkeit durch wenigstens den zweiten von dem ersten und dem zweiten Halter (5, 6; 25, 26; 35, 36) durchzuführen, und
wobei das System eine austauschbare Kartusche umfasst, die ein Gehäuse aufweist, in dem der erste und der zweite Halter (5, 6; 25, 26) angeordnet sind oder wenigstens zwei austauschbare Kartuschen (35, 36) umfasst, wobei jede ein entsprechendes Gehäuse beinhaltet, in dem der erste und der zweite Halter jeweils angeordnet sind, **dadurch gekennzeichnet, dass**
das lonenaustauschmaterial, das in den Medien in dem ersten und dem zweiten Halter (5, 6; 25, 26; 35, 36) beinhaltet ist, ein schwach säurehaltiges Kationenaustauschpolymer ist, und
dass das System angeordnet ist, um wenigstens einen dritten Anteil der zu behandelnden Flüssigkeit weder durch den ersten noch den zweiten Halter (5, 6) durchzuführen, sondern durch eine Bypass-Leitung, die kein lonenaustauschmaterial oder lonenaustauschmaterial für die Ionen-Spezies entgegengesetzter Polarität zu der ersten und der zweiten Gegenion-Spezies enthält.

2. System nach Anspruch 1, wobei
die erste und die zweite Gegenion-Spezies Kation-Spezies sind, insbesondere Kation-Spezies, die nicht Wasserstoff sind, eher insbesondere Kation-Spezies von einer Gruppe umfassend Natrium, Kalium und Magnesium.

3. System nach Anspruch 1 oder 2, wobei das Medium in dem ersten Halter (5; 25; 35) und das Medium in dem zweiten Halter (6; 26; 36) eine Menge von einem Kationenaustauschmaterial in der Wasserstoffform beinhaltet.

4. System nach einem der vorstehenden Ansprüche, wobei
das Kationenaustauschmaterial in dem ersten Halter (5; 25; 35) teilweise mit einer Kation-Spezies, die nicht Wasserstoff ist, beladen ist und das Kationenaustauschmaterial in dem zweiten Halter (6; 26; 36) teilweise mit einer anderen Kation-Spezies, die nicht Wasserstoff ist, beladen ist.

5. System nach Anspruch 4,
wobei die erste Kation-Spezies monovalent ist und die zweite Kation-Spezies bivalent ist.

6. System nach einem der vorstehenden Ansprüche, wobei
das erste und das zweite Medium nur lonenaustauschmaterialien derselben Art beinhalten.

7. System nach einem der vorstehenden Ansprüche,
wobei das erste und das zweite Medium nur lonenaustauschmaterialien beinhalten, welche dieselben funktionellen Gruppen aufweisen.

8. Kartusche für eine Flüssigkeitsbehandlungsvorrichtung (16, 17), einschließlich einem System nach einem der Ansprüche 1-7.

## Revendications

1. Système de conditionnement d'un liquide tel que l'eau incluant :
un premier contenant (5 ; 25; 35) d'une substance de traitement de liquide, la substance dans le premier contenant (5; 25; 35) incluant un matériau échangeur d'ions chargé avec au moins une première espèce de contre-ions ; et
un deuxième contenant (6 ; 26 ; 36) d'une substance de traitement de liquide, la substance dans le deuxième contenant incluant un matériau échangeur d'ions chargé avec au moins une deuxième espèce de contre-ions de la même polarité que la première, dans lequel les substances dans le premier et le deuxième contenant (5, 6 ; 25, 26 ; 35, 36) sont configurées pour échanger au moins une des première et deuxième espèces de contre-ions avec des ions dans le liquide à un degré différent,
dans lequel au moins l'une de la substance dans le premier contenant (5 ; 25 ; 35) et de la substance dans le deuxième contenant (6 ; 26 ; 36) inclut une quantité de matériau échangeur de cations sous forme hydrogène,
dans lequel le système est organisé de façon à amener une première fraction du liquide à traiter uniquement par le premier des premier et deuxième contenants (5, 6 ; 25, 26 ; 35, 36) et une deuxième fraction du liquide à traiter par au moins le deuxième des premier et deuxième contenants (5, 6 ; 25, 26 ; 35, 36), et
dans lequel le système comprend une cartouche remplaçable ayant un boîtier dans lequel les premier et deuxième contenants (5, 6 ; 25, 26) sont agencés ou comprend au moins deux cartouches remplaçables (35, 36), chacune incluant un boîtier respectif, dans lequel les premier et deuxième contenants sont respectivement agencés, **caractérisés en ce que**
le matériau échangeur d'ions inclus dans les substances dans les premier et deuxième contenants (5, 6 ; 25, 26 ; 35, 36) est un polymère échangeur de cations faiblement acide, et
**en ce que** le système est agencé pour amener au moins une troisième fraction du liquide à traiter à travers aucun des premier et deuxième contenants (5, 6), mais à travers un conduit de dérivation ne contenant pas de matériau échangeur d'ions ou un matériau échangeur d'ions pour les espèces d'ions de polarité opposée aux première et deuxième espèces de contre-ions.

2. Système selon la revendication 1, dans lequel les première et deuxième espèces de contre-ions sont des espèces de cations, en particulier des espèces de cations autres que l'hydrogène, plus particulièrement des espèces de cations d'un groupe comprenant le sodium, le potassium et le magnésium.

3. Système selon la revendication 1 ou 2, dans lequel au moins l'une de la substance dans le premier contenant (5 ; 25 ; 35) et de la substance dans le deuxième contenant (6 ; 26 ; 36) inclut une quantité de matériau échangeur de cations sous forme hydrogène.

4. Système selon l'une quelconque des revendications précédentes, dans lequel
le matériau échangeur de cations dans le premier contenant (5; 25; 35) est partiellement chargé avec une espèce de cations autre que l'hydrogène et le matériau échangeur de cations dans le deuxième contenant (6 ; 26 ; 36) est partiellement chargé avec une autre espèce de cations autre que l'hydrogène.

5. Système selon la revendication 4,
dans lequel la première espèce de cations est monovalente et la deuxième espèce de cations est divalente.

6. Système selon l'une quelconque des revendications précédentes, dans lequel
les première et deuxième substances incluent uniquement des matériaux échangeurs d'ions du même type.

7. Système selon l'une quelconque des revendications précédentes,
dans lequel les première et deuxième substances incluent uniquement des matériaux échangeurs d'ions ayant les mêmes groupes fonctionnels.

8. Cartouche pour un dispositif de traitement de liquide (16, 17), incluant un système selon l'une quelconque des revendications 1 à 7.
